# EUROPÄISCHE PATENTSCHRIFT

(11) **EP 2 267 397 B1**
(45) Veröffentlichungstag und Bekanntmachung des Hinweises auf die Patenterteilung: **22.08.2018**
(21) Anmeldenummer: 10006167.0
(22) Anmeldetag: 15.06.2010
(51) Int. Cl.: F41G 7/22, G01S 3/781, G01S 3/786, G02B 13/14, G02B 26/10, G02B 26/00, G02B 26/02, G02B 17/06

(54) **Optisches System für einen Flugkörper und Verfahren zum Abbilden eines Gegenstands**
Optical system for a missile and method for depicting an object
Système optique pour un objet volant et procédé de représentation d'un objet

(30) Priorität: 23.06.2009 DE 102009029895
(43) Veröffentlichungstag der Anmeldung: 29.12.2010
(73) Patentinhaber: Diehl Defence GmbH & Co. KG, 88662 ÜBERLINGEN (DE)
(72) Erfinder: Eckhardt, Reiner, 88662 Überlingen (DE)
(74) Vertreter: Diehl Patentabteilung

(56) Entgegenhaltungen:
- EP-A1- 1 308 748
- EP-A1- 1 586 195
- DE-C1- 3 616 796

## Beschreibung

Die Erfindung betrifft ein optisches System für einen Flugkörper mit einer Optik zum Abbilden eines Gegenstands mittels eines Strahlengangs in eine Abbildungsebene, wobei die Optik eine um eine Rollachse und eine Nickachse des Flugkörpers drehbar gelagerte Außenoptik und eine Innenoptik aufweist und eines der Enden des Strahlengangs strukturfest im Flugkörper liegt.
Außerdem betrifft die Erfindung ein Verfahren zum Abbilden eines Gegenstands mittels eines Strahlengangs einer Optik eines Flugkörpers in eine Abbildungsebene, wobei die Optik eine um eine Rollachse und eine Nickachse des Flugkörpers drehbar gelagerte Außenoptik und eine Innenoptik aufweist und eines der Enden des Strahlengangs strukturfest im Flugkörper liegt.
Die Größe der Eintrittsapertur einer Optik ist zum Erzielen einer hohen Auflösung einer Abbildung eines Gegenstands oder einer hohen Empfindlichkeit für sehr schwache Strahlung von maßgebender Bedeutung. Zum optischen Verfolgen eines mit hoher Auflösung abgebildeten und gegenüber der Optik beweglichen Gegenstands wird üblicherweise die Eintrittsapertur - bzw. eine bewegliche Außenoptik - dem sich bewegenden Gegenstand nachgeführt, sodass sich die Eintrittsapertur relativ zu einer die Optik tragenden Struktur bewegt. Im operationellen Einsatz eines Flugkörpers beispielsweise muss die Eintrittsapertur gegenüber der Flugkörperlängsachse in einem möglichst großen Schielwinkelbereich auf den nachverfolgten Gegenstand ausgerichtet werden können.
Bei großen Schielwinkeln wird die Eintrittsapertur jedoch begrenzt durch den Öffnungswinkel eines Sichtfensters der Optik, üblicherweise einer meist kugelförmigen, optischen transparenten Nasenabdeckung, auch Dom genannt. Bleibt die Eintrittsapertur aktiv auf den anvisierten Gegenstand fixiert, so führen aerodynamische oder regelungsbedingte Drehschwingungen des Flugkörpers um dessen Querachsen bei einer auftretenden Abschattung zu einer entsprechend veränderten Eintrittsapertur. Die Veränderungen der Eintrittsapertur führen zu Helligkeitsschwankungen und anderen Störungen im aufgenommenen Bild des Gegenstands. Derselbe Effekt ergibt sich, wenn bei einer Abschattung der Eintrittsapertur durch ein Sicht begrenzendes Element des Flugkörpers der Schielwinkel zur Zielsuche aktiv verändert wird. Dies gilt auch für die Umkehrvariante, in der das optische System als Teil eines Strahlers verwendet wird.

Durch genaue Vermessung der Schielwinkelbewegung kann theoretisch der störende Effekt rechnerisch ermittelt und in einem durchgehend bekannten System kompensiert werden. Bei hoher Dynamik des Strahlungs-Szenariums in der Eintrittsapertur, z. B. durch Hintergrundstrahlung, Immissionsstrahlung des aerodynamisch aufgeheizten Domes und der inneren Struktur des Flugkörpers, durch variable Zielstrahlung oder Gegenmaßnahmen, wird eine solche Kompensation ungenau und kann sogar zu unerwünschten Störungen, beispielsweise Aliasingeffekten, führen.

Aus der EP 1 308 748 A1 und der EP 1586 195 A1 sind optische Systeme für Flugkörper mit einem Roll- und Nickrahmen und einem strukturfest angeordneten Detektor bekannt. Zur Reduzierung von thermischer Hintergrundstrahlung ist der in der EP 1 308 748 A1 offenbarte Detektor gekühlt und weist eine Kaltblende auf. Ein optoelektronisches Ortungssystem mit einem Flüssigkristallelement, dessen Rasterelemente zur Ausblendung von externen Störstrahlern strahlungsundurchlässig geschaltet werden können, ist in DE 36 16 796 C1 gezeigt.

Es ist eine Aufgabe der Erfindung, ein optisches System für einen Flugkörper anzugeben, mit dem auch bei großen Schielwinkeln eine Bildstörung durch Abschattungseffekte vermieden werden kann.

Diese Aufgabe wird durch ein optisches System gemäß den Merkmalen von Patentanspruch 1 gelöst, das erfindungsgemäß eine während eines Flugs des Flugkörpers in den Strahlengang einführbare Blende zum Ausblenden einer durch ein Element des Flugkörpers bewirkte Abschattung im Strahlengang bei einer zur Rollachse verkippten Blickrichtung der Außenoptik aufweist. Durch die Blende wird zwar die Gesamtintensität der den Strahlengang durchlaufenden Strahlung verringert, störende Intensitätsschwankungen durch eine Bewegung der Außenoptik und daraus resultierende Bildstörungen können jedoch vermieden werden.

Die Erfindung ist vorteilhaft anwendbar bei einem Strahler, beispielsweise zur Beleuchtung eines Ziels, bei dem die Optik eine Strahlungsquelle, z. B. einen Laser, nach außen abbildet. Die Abbildungsebene kann in einem solchen Fall im Unendlichen liegen. Ebenfalls ist die Erfindung anwendbar für eine Detektoroptik, bei dem beispielsweise ein Gesichtsfeld auf einen Detektor des Flugkörpers abgebildet wird.

Die Abbildungsebene liegt dann auf dem Detektor und bildet das strukturfeste Ende des Strahlengangs. Das optische System kann für einen Suchkopf eines Flugkörpers ausgeführt sein und die Optik kann zum Abbilden eines Gesichtsfelds mittels eines Abbildungsstrahlengangs auf einen strukturfest im Flugkörper angeordneten Detektor vorgesehen sein, wobei die Innenoptik eine Detektoroptik sein kann. Die Blende dient hierbei zum Ausblenden einer Abschattung eines strukturfesten Elements des Flugkörpers auf dem Detektor bei einer zur Rollachse bzw. zur Flugkörperachse verkippten Blickrichtung der Außenoptik. Die Rollachse fällt zweckmäßigerweise mit der Flugkörperachse zusammen.

Die Außenoptik kann ein nach außen gerichteter Teil der Optik sein, beispielsweise in ein Gesichtsfeld des Flugkörpers oder in Richtung eines Ziels, das beleuchtet werden soll. Vorzugsweise umfasst sie ein die Eintrittsapertur der Optik bildendes optisches Element. Dies kann ein Spiegel, eine Linse oder ein anderes optisches Element sein. Die Innenoptik ist zweckmäßigerweise ein auf einen Detektor oder eine Strahlungsquelle gerichteter Teil der Optik. Die Nickachse ist zweckmäßigerweise senkrecht zur Rollachse ausgerichtet. Das strukturfeste Ende des Strahlengangs kann auf einem Detektor oder einer Strahlungsquelle liegen. Vorteilhafterweise ist die Außenoptik in einem Rollrahmen gelagert, der um die Rollachse relativ zu einem strukturfesten Element drehbar ist. Weiter vorteilhaft ist die Außenoptik in einem Nickrahmen gelagert, der relativ zum Rollrahmen um die Nickachse drehbar ist und somit um die Nickachse und Rollachse relativ zum strukturfesten Element. Das strukturfeste Element ist vorteilhafterweise unbeweglich relativ zu einer Außenhülle des Flugkörpers angeordnet. Der Begriff "strukturfest" wird im Folgenden für solche Elemente verwendet, die relativ zur Außenhülle des Flugkörpers unbeweglich sind. Das abschattende Element kann ein strukturfestes Element sein.

In einer vorteilhaften Ausführungsform der Erfindung ist die in den Strahlengang eingeführte Blende so angeordnet, dass sie bei einer Bewegung der Außenoptik um die Nickachse in einem Winkelbereich von zumindest 150°, insbesondere unbewegt verbleibend, die Abschattung des strukturfesten Elements, beispielsweise auf dem Detektor, abdeckt, insbesondere beidseitig abdeckt. Dieser Ausführungsform liegt die Idee zugrunde, dass eine Abschattung bei einem großen Schielwinkel oder Nickwinkel auf einer Seite des Bildes auftritt und bei einer Bewegung der Außenoptik um beispielsweise 180° um die Nickachse die Abschattung zuerst aus dem Bild verschwindet und dann auf der anderen Seite des Bildes wieder erscheint. Bei einer solchen starken Bewegung der Außenoptik um die Nickachse tritt somit eine beidseitige Abschattung im Bild auf. Um die Blende nicht mechanisch von einer Seite auf die andere des Bildes verfahren zu müssen ist es vorteilhaft, wenn sie so angeordnet ist, dass sie unbewegt verbleibend beide Abschattungen abdeckt.

Eine einfache mechanische Konstruktion zum Ausblenden beidseitiger Abschattungen kann erreicht werden, wenn die Außenoptik relativ zur Blende um die Nickachse drehbar ist. Die Blende kann somit bei einer Drehung der Außenoptik um die Nickachse ruhend, also strukturfest, verbleiben. Da bei einer Drehung der Außenoptik um die Nickachse um beispielsweise 90° auch das auf einem Detektor abgebildete Bild um 90° verdreht wird, tritt die Abschattung zwar auf zwei Seiten des Bildes aber nur auf einer Seite des Detektors auf. Durch den ruhenden Verbleib der Blende bei einer Bewegung der Außenoptik um die Nickachse kann diese so angeordnet sein, dass eine Abschattung auf dem Detektor durch das strukturfeste Element auch bei ruhender Blende stets und unabhängig vom Nickwinkel ausgeblendet wird.

Je nach Aufbau der Optik rotiert das Bild auf dem Detektor auch bei einer Bewegung der Außenoptik nur um die Rollachse. Um die Position der Blende relativ zum abgebildeten Bild stets korrekt zur Ausblendung der Abschattung zu halten ist es vorteilhaft, wenn die Blende relativ zum strukturfesten Element um die Rollachse drehbar ist. Sie kann unbeweglich am Rollrahmen befestigt sein und ist zweckmäßigerweise relativ zu einem Detektor um die Rollachse drehbar.

Ist die Blende zusammen mit der Innenoptik um die Rollachse drehbar, so kann eine mechanisch einfache Konstruktion erreicht werden.

Zum einfachen Ausblenden einer Abschattung bei relativ kleinem Intensitätsverlust der Strahlung auf den Detektor ist es vorteilhaft, wenn die Blende asymmetrisch in den Strahlgang einführbar ist, insbesondere nur von einer Richtung.

Vorteilhafterweise ist die Blende mit einer geraden Kante mit einer Kantenrichtung versehen, die bei einer Bewegung der Blende in den Strahlengang hinein als Vorderkante in den Strahlengang eingeführt wird, wobei die Kantenrichtung in jeder Position der Außenoptik senkrecht zur Nickachse ausgerichtet ist. Durch diese Anordnung kann auch eine große Abschattung von bis zu 50 % des Bildes zuverlässig ausgeblendet werden.

Vorteilhafterweise ist die Blende zumindest soweit in den Strahlengang einführbar, dass 50 % des Strahlengangs, und beispielsweise eines Bilds auf einem Detektor, durch die Blende ausgeblendet wird. Hierdurch kann auch bei einem großen Schielwinkel von über 75°, insbesondere bis zu 90° zur Rollachse ein zuverlässiges Ausblenden der Abschattung erreicht werden.

Bei hohen Fluggeschwindigkeiten des Flugkörpers erhitzen sich strukturfeste Elemente und strahlen infrarote Strahlung ab, die das Bild des beobachteten Gegenstands überlagert. Liegt die Zielstrahlung beispielsweise im kurzwelligeren Bereich, so ist es vorteilhaft, wenn die langwellige und störende Wärmestrahlung ausgeblendet wird. Dies kann erreicht werden, wenn die Blende einen teiltransmissiven Spektralfilter aufweist. Auf diese Weise kann die Zielstrahlung voll umfänglich oder zumindest zum größten Teil erhalten bleiben, während Wärmestrahlung des die Abschattung bewirkenden strukturfesten Elements ausgeblendet wird.

Vorteilhafterweise umfasst die Blende einen Blendenträger mit mehreren als unterschiedliche Spektralfilter ausgeführte Blenden, die wählbar in den Strahlengang einführbar sind. Mit einem solchen, beispielsweise als Filterrad ausgeführten Blendenträger kann flexibel auf unterschiedliche Zielstrahlungen und Störstrahlungen reagiert werden. Zweckmäßigerweise erfolgt die Auswahl des Spektralfilters in Abhängigkeit von einer Frequenz einer Zielstrahlung.

Es ist außerdem eine Aufgabe der Erfindung, ein Verfahren zum Abbilden eines Gegenstands anzugeben, bei dem eine hohe Bildqualität auch bei einem großen Schielwinkel der Optik erreicht werden kann.

Diese Aufgabe wird durch ein Verfahren gemäß den Merkmalen von Patentanspruch 11 gelöst, bei dem erfindungsgemäß während eines Flugs des Flugkörpers eine Blende in den Strahlengang eingeführt wird zum Ausblenden einer Abschattung eines strukturfesten Elements des Flugkörpers im Strahlengang bei einem großen Schielwinkel der Optik. Unter einem großen Schielwinkel der Optik wird hierbei ein Winkel von zumindest 60° zur Rollachse oder Flugkörperachse verstanden. Eine störende Intensitätsschwankung von auf einem Detektor auftreffender Strahlung und eine damit verbundene Bildstörung kann vermieden werden.

In einer vorteilhaften Ausgestaltung der Erfindung wird die Flugzeit von einem Flugstart bis zu einem anvisierten Ziel errechnet und mit Hilfe eines Timers wird das Einführen der Blende nach Ablauf von zumindest 25 % der berechneten Flugzeit, insbesondere mindestens 30 % der berechneten Flugzeit, zu dem anvisierten Ziel gesteuert. Dieser Ausführungsform liegt der Gedanke zugrunde, dass sich durch kontinuierliche Annäherung des Flugkörpers an den Gegenstand dessen Strahlung, also die Zielstrahlung, entsprechend dem Quadrat der Entfernung zunimmt. Auf der Eintrittsapertur bzw. der Außenoptik fällt somit bei 70 % der ursprünglichen Entfernung zum Gegenstand etwa die doppelte Zielstrahlung. Bei einem Einführen der Blende, wobei beispielsweise 50 % der einfallenden Strahlung ausgeblendet wird, fällt damit auf den Detektor das gleiche Signal wie zum Flugstart. Ab diesem Zeitpunkt, also nach Absolvieren von 25 bzw. 30 % der Flugzeit, ist dann die durch die Blende konstant gehaltene Eintrittsapertur von Vorteil.

Außerdem wird vorgeschlagen, dass während des Flugs eine Intensität einer auf einen Detektor auftreffenden Strahlung überwacht wird und das Einführen der Blende bei einer zeitlichen Schwankung der Intensität um mehr als einen vordefinierten Grenzwert erfolgt. Die Schwankung ist zweckmäßigerweise eine absolute Schwankung. Das schwankende Intensität ist ein Indiz für wechselnde Abschattungen oder wechselnd in das Bild Wärmestrahlung einstrahlende strukturfeste Elemente. Durch das Einfahren der Blende in den Strahlengang kann die Schwankung der Intensität verringert und die Bildqualität verbessert werden.

Eine weitere Variante der Erfindung sieht vor, dass während des Flugs ein Schielwinkel der Außenoptik überwacht wird und das Einführen der Blende in Abhängigkeit vom Verlauf des Schielwinkels über eine Zeit erfolgt. Ist beispielsweise der anvisierte Gegenstand noch weit entfernt, so ist der Schielwinkel bei einem Anflug des Flugkörpers in Richtung zum Gegenstand in der Regel klein. Das Einfahren der Blende ist nicht notwendig. Je näher sich der Flugkörper dem Gegenstand nähert desto größer kann der Schielwinkel werden. Durch das Überwachen des Schielwinkels kann ein vorteilhafter Zeitpunkt zum Einführen der Blende in den Strahlengang ermittelt werden. Übersteigt der Schielwinkel beispielsweise zum ersten Mal während des Flugs oder innerhalb einer festgelegten Zeit mehr als nx, wobei n eine festgelegte Zahl ist, oder innerhalb einer festgelegten Zeit mehr als eine andere festgelegte Zeit einen Grenzwert, so kann das Einfahren der Blende in den Strahlengang gesteuert werden.

Die Blende ist zweckmäßigerweise dazu ausgelegt, zumindest 30 %, insbesondere bis zu 50 % der einfallenden Strahlung auszublenden. Vorteilhafterweise ist die Blende dazu geeignet, den Strahlengang im Bereich der Blende von einer Seite zumindest zur Hälfte auszublenden.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: Eine perspektivische Ansicht auf die Spitze eines Flugkörpers mit einem Suchkopf,
- Fig. 2: einen Schnitt durch den Suchkopf aus Fig. 1,
- Fig. 3: eine Bildsequenz zu verschiedenen Stellungen einer Außenoptik des Suchkopfs und zu daraus resultierenden Bildern auf einem Detektor,
- Fig. 4: ein Filterrad mit 3 spektral filternden Blenden,
- Fig. 5: ein Diagramm des Schielwinkels α der Außenoptik über die Zeit und
- Fig. 6: ein schematisches Diagramm der Intensität von auf dem Detektor auftreffender Strahlung in Abhängigkeit von deren Wellenlänge.

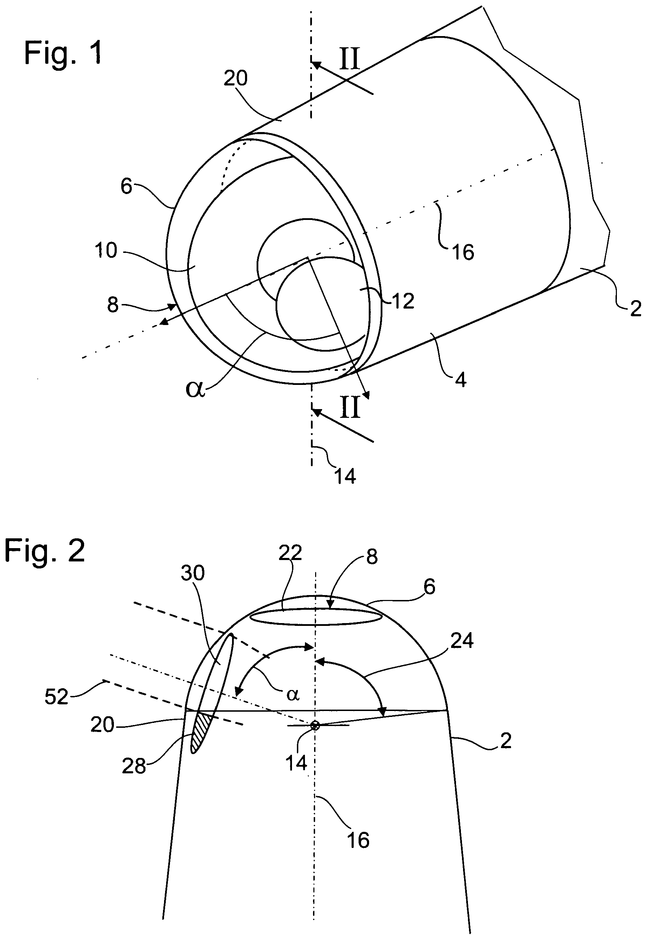

Figur 1 zeigt die vordere Spitze eines Flugkörpers 2, beispielsweise eines Lenkflugkörpers zum Bekämpfen von Luftzielen, mit einem Suchkopf 4. Der Suchkopf 4 trägt an seinem vorderen Ende einen für infrarote Strahlung durchlässigen Dom 6, beispielsweise aus Saphir, mit einer sphärischen Oberfläche und einem Öffnungswinkel, auch Domwinkel genannt, von knapp 180°. Im Inneren des Doms 6 ist eine Außenoptik 8, die als Eingangsoptik eines Abbildungsstrahlengangs dient, mit zwei Spiegeln 10, 12 sichtbar, die zueinander starr angeordnet, jedoch gemeinsam um eine Nickachse 14 und eine Rollachse 16 des Suchkopfs 4 rotierbar sind. Die Rollachse 16 verläuft parallel zu einer Flugkörperachse des Flugkörpers 2.

Bei dem in Figur 1 dargestellten Beispiel ist die Außenoptik 8, die mit dem Spiegel 10 die Eintrittsapertur einer in Figur 2 dargestellten Optik 18 bildet, mit einem Nickwinkel oder Schielwinkel α von rund 70° zur Flugkörperachse bzw. Rollachse 16 ausgelenkt. Ein Teil der Eintrittsapertur ist daher durch ein strukturfestes Element 20, in diesem Fall ein metallischer Träger des Doms 6, der zugleich eine Außenhülle des Flugkörpers 2 bzw. Suchkopfs 4 bildet, abgeschattet. Die Außenoptik 8 kann in einem anderen Ausführungsbeispiel als Linsenoptik ausgeführt sein, bei der anstelle des die Eintrittsapertur bildenden Spiegels 10 eine Linse oder ein anderes optisches Element verwendet wird.

Die Winkel der Außenoptik 8 sind in der schematischen Ansicht in Fig. 2 dargestellt. Die Außenoptik 8 ist als Linse dargestellt, die die Eintrittsapertur 22 bildet. Der Dom 6 bildet einen Domwinkel 24 von etwa 84°, so dass die um die Nickachse 14 relativ zur Rollachse 16 um den Schielwinkel α oder Nickwinkel von 84° verkippte Außenoptik 8 zur Hälfte von dem Element 20 abgeschattet wird. Die Eintrittsapertur 22 und somit der Strahlengang sind somit zur Hälfte abgeschattet. Ebenfalls denkbar für die Optik 8 ist eine Konstruktion, bei der eine hälftige Abschattung erst bei einem Schielwinkel α von 90° auftritt.

Bei dem in Fig. 2 gezeigten Beispiel ist die Außenoptik 8 um etwa 70° zur Flugkörperachse bzw. Rollachse 16 verkippt, so dass die Abschattung 28 etwa 25% beträgt und die abgeschattete Apertur 30 etwa 75% der Eintrittsapertur 22.

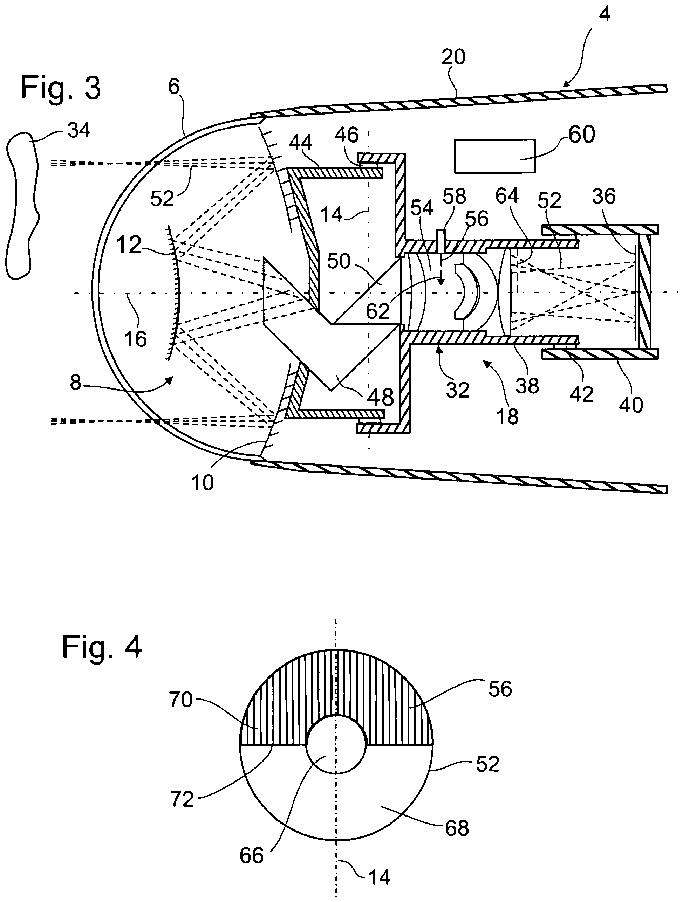

Figur 3 zeigt eine schematische Schnittdarstellung durch den Suchkopf 4 des Flugkörpers 2. Der Suchkopf 4 umfasst eine Optik 18 mit der Außenoptik 8, die die Spiegel 10, 12 umfasst, und einer Detektoroptik 32, die die Innenoptik bildet. Die Detektoroptik 32 umfasst eine Anordnung von Linsen zum Abbilden eines Gegenstands 34 auf einem Detektor 36. Der Detektor 36 ist strukturfest im Suchkopf 4 angeordnet, also relativ zur Außenhaut 20 des Suchkopfs 4 unbeweglich befestigt. Die Detektoroptik 32 ist in einem Rollrahmen 38 eingeordnet, der durch Lager 42 beweglich gelagert und relativ zu strukturfesten Elementen 40 um die Rollachse 16 rotierbar ist. Relativ zum Rollrahmen 38 ist wiederum ein Nickrahmen 44 in Lagern 46 beweglich gehaltert und ist zusätzlich zur Rotierbarkeit um die Rollachse 16 auch um die Nickachse 14 drehbar. Hierdurch ist eine zweidimensionale Beweglichkeit der Außenoptik 8 in einem halbkugelgroßen Winkelbereich gewährleistet. Durch Prismen 48, 50 wird von der Außenoptik 8 eingefangene Strahlung zur Detektoroptik 32 gelenkt, wobei das Prisma 50 im Rollrahmen 38 befestigt ist und das Prisma 48 im Nickrahmen 44. Zwischen den einander zugewandten Grenzflächen der Prismen 48, 50, also dort, wo sie relativ zueinander beweglich sind, ist eine Zwischenbildebene im Strahlengang 52 der Optik 18. Anstelle der Prismen 48, 50 sind Spiegel denkbar.

Die Detektoroptik 32 weist eine Zone 54 auf, in der die Strahlen des Strahlengangs 42 nahezu parallel zueinander verlaufen, was der Übersichtlichkeit halber in Figur 2 nicht dargestellt ist. In dieser Zone 54 ist eine Blende 56 angeordnet, die durch einen Antrieb 58 - gesteuert von einem Steuermittel 60 - in den Strahlengang 52 der Optik 18 in Richtung des dargestellten Pfeils 62 einführbar ist. Anstelle der Anordnung der Blende 56 innerhalb der Detektoroptik 32 ist auch eine Anordnung zwischen der Detektoroptik 32 und dem Detektor 36 denkbar, beispielsweise wie durch die gestrichelte Linie 64 dargestellt ist.

Die Blende 56 kann von der Steuereinheit 60 während des Flugs des Flugkörpers 2 in den Strahlengang 52 hineinbewegt und wieder herausbewegt werden, wobei das Steuermittel 60 mit Hilfe von Software dazu vorbereitet ist, die Blende 56 in Abhängigkeit eines vorbestimmten Parameters in den Strahlengang 52 hineinzubewegen. Um eine Abschattung der Eintrittsapertur 22 bei einem Schielwinkel α von zumindest 84° vollständig ausblenden zu können, kann die Blende 56 bis zur Mitte des Strahlengangs 52 eingebracht werden, sodass die Hälfte der Querschnittsfläche des Strahlengangs 52 am Ort der Blende 56 von der Blende 56 ausgeblendet wird. Auch eine unerwünschte Rückstrahlung von der Optik 18 in Richtung zum Gegenstand 34 kann hierdurch unterdrückt werden. Wie weit das Steuermittel 60 die Blende 56 in den Strahlengang 52 einbringt, kann ebenfalls von einem Parameter abhängig gemacht werden, beispielsweise von einem Verlauf des Schielwinkels über die Zeit.

Figur 4 zeigt einen Querschnitt durch den Strahlengang 52 am Ort der Blende 56. Ein Mittelabschnitt 66 des Strahlengangs 52 bleibt wegen der Abschattung durch den Spiegel 12 strahlungsfrei. In einem Passierbereich 68 wird Strahlung von der Außenoptik 8 zum Detektor 36 hindurch gelassen, während in einem Blendenbereich 70 die Strahlung des Strahlengangs 52 durch die Blende 56 ausgeblendet wird. Selbstverständlich kann auch der Mittelabschnitt 66 teilweise von der Blende 56 überdeckt werden. Die Blende 56 ist so im Strahlengang 52 angeordnet, dass eine in den Strahlengang 52 weisende Vorderkante 72 senkrecht zur Nickachse 14 verläuft. Insbesondere ist die Vorderkante 72 sowohl zur Nickachse 14 als auch zur Rollachse 16 senkrecht angeordnet. Aus Sicht von Figur 3 verläuft die Vorderkante 62 somit senkrecht zur Papierebene.

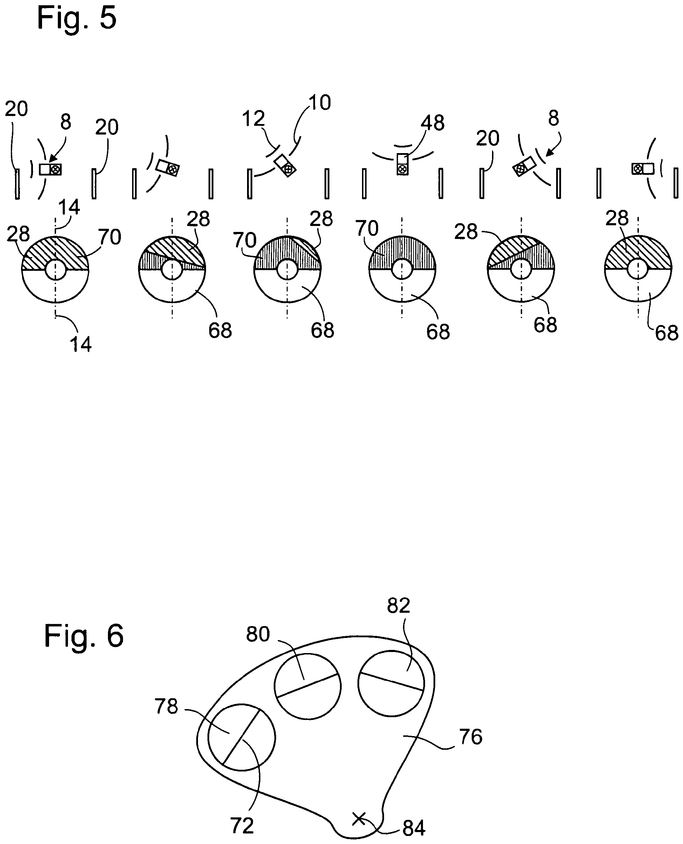

In Figur 5 deuten sechs kleine Grafiken den Verlauf einer Abschattung 74 durch das strukturfeste Element 20 bei einer Schwenkbewegung der Außenoptik 8 um 180° um die Nickachse 14 an. In der ersten, linken Grafik ist die Außenoptik 8 und mit ihr die Eingangsapertur um 90° zur Rollachse 16 geschwenkt, der Schielwinkel α beträgt also 90°. Durch das strukturfeste Element 20 sei die Hälfte des Strahlengangs 42 im Bereich der Blende 46 abgeschattet, die Abschattung 64 beträgt also die Hälfte des Querschnitts des Strahlengangs 52 am Ort der Blende 56. In der zweiten Grafik beträgt der Schielwinkel α etwa 70°. Die Abschattung 74 ist somit etwas reduziert, wie auf dem unteren Teil der zweiten Grafik dargestellt ist. In dieser Grafik ist auch die Blende 56, bzw. deren Blendenbereich 70 sichtbar und es ist deutlich, dass der Blendenbereich 70 die komplette halbseitige Abschattung 28, die in der ersten, linken Grafik gezeigt ist, ausblendet. Der Passierbereich 68 beträgt also stets und unabhängig von der Größe der Abschattung 28 50 % des Strahlengangs 52. In der dritten Grafik ist ein Schielwinkel α von 45° dargestellt, die Abschattung 28 ist nun nur noch sehr gering. Bei einem Schielwinkel α von 0° tritt keine Abschattung auf, wie in der vierten Grafik gezeigt ist, wohingegen ein Schielwinkel α in der anderen Richtung, wie in der Grafiken 5 und 6 dargestellt ist, wieder zu einer Abschattung 28 führt. Es ist jedoch sichtbar, dass der Passierbereich 68 während des ganzen Verlaufs der Schwenkbewegung der Außenoptik 8 um 180° um die Nickachse 14 unverändert verbleibt.

Aus Figur 5 ist auch zu erkennen, dass die Abschattung 28 durch das strukturfeste Element 20 bei einer Drehung der Eingangsapertur 22 um die Nickachse 14 im Bereich der Blende 56 und auch auf den Detektor 36 mit dem Schielwinkel α mit rotiert. Bei einer Nickbewegung von beispielsweise 90° rotiert somit ein Abbild des Gegenstands 34 auf dem Detektor 36 und auch die Abschattung 28 im Bereich der Blende 56 um den gleichen Winkelbetrag. Hierdurch bewegt sich die Abschattung 28 bei der in Figur 5 gezeigten Darstellung bei wachsendem Schielwinkel α stets von oben nach unten in den Strahlengang 42 hinein, unabhängig davon, ob die Eingangsapertur 22 nach rechts oder links geschwenkt ist. Durch die Anordnung der Blende 56 blendet diese somit stets die Abschattung 28 insgesamt aus, bei allen Schielwinkeln a, in jede Richtung, ohne selbst bewegt werden zu müssen. Bei einer Rotation der Außenoptik 8 um die Rollachse 16 rotiert sowohl die Abschattung 28 als auch die Blende 56 gleichermaßen, sodass die Blende 56 unabhängig von der Position der Außenoptik 8 die Abschattung 28 stets ausblendet und somit den Passierbereich 68 und somit die Strahlungsintensität auf dem Detektor 36 konstant hält.

Figur 6 zeigt ein Blendenrad 76 mit drei Blenden 78, 80, 82, die jeweils aus unterschiedlichen Spektralfiltern bestehen. Auf diese Weise kann beispielsweise nur ein langwelliger, ein lang- und mittelwelliger oder nur ein kurzwelliger Spektralbereich ausgefiltert werden, beispielsweise in Abhängigkeit von erkannter Zielstrahlung. Das Blendenrad 76 ist um eine Drehachse 84 von beispielsweise dem Antrieb 58 drehbar, sodass frei wählbar eine der Blenden 78, 80, 82 in den Strahlengang 52 einführbar ist. Die Vorderkanten 72 der Blenden 78, 80, 82 sind hierbei stets in der gleichen Richtung im Strahlengang 52 ausgerichtet, nämlich senkrecht zur Nickachse 14.

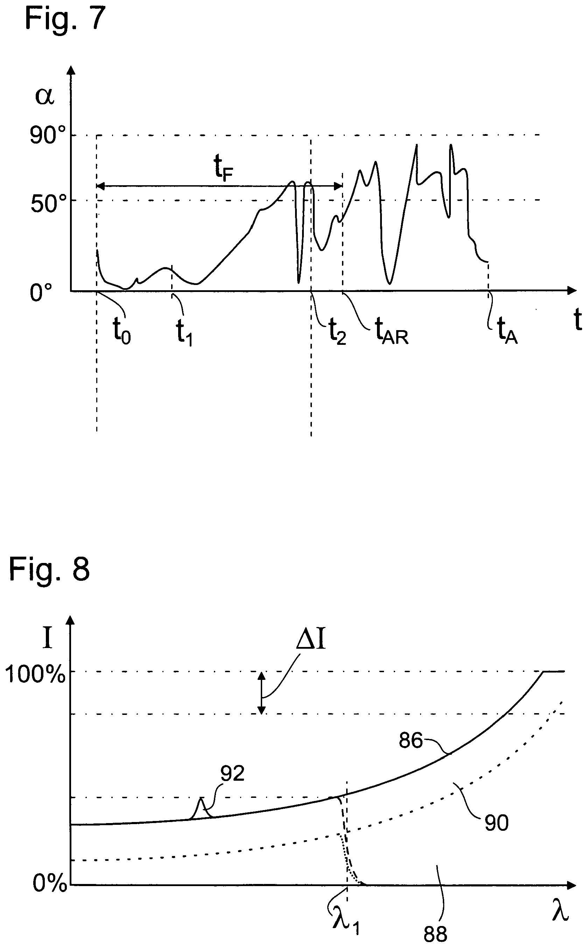

Figur 7 zeigt einen Verlauf des Schielwinkels α der Eintrittsapertur 22 bzw. Außenoptik 8 im Verlauf über die Zeit t. Zum Zeitpunkt t₀ erfolgt beispielsweise ein Abschuss des Flugkörpers 2 von einem Flugzeug in Richtung auf ein Ziel, bzw. den Gegenstand 34. Die Außenoptik 8 ist hierbei bereits auf das Ziel ausgerichtet, sodass der Schielwinkel α ungleich Null ist und im Beispiel aus Figur 7 etwa 20° beträgt. Im Verlauf des Fluges des Flugkörpers 2 in Richtung auf das Ziel variiert der Schielwinkel α bis zum Auftreffen des Flugkörpers 2 auf sein Ziel, wobei die Schwankung des Schielwinkels α mit abnehmender Entfernung zum Ziel, beispielsweise durch Flugmanöver des Ziels, zunimmt.

Es bestehen nun verschiedene Möglichkeiten zur Steuerung des Hineinbewegens der Blende 56 in den Strahlengang 52. Eine Möglichkeit ist eine Zeitsteuerung. Hierbei wird eine Flugzeit t_{F} vom Startzeitpunkt t₀ bis zu einem errechneten Auftreffzeitpunkt t₂ berechnet. Bei einer Annäherung von 30 %, also nach der Absolvierung von etwa 30 % der Flugzeit t_{F} hat die Zielstrahlung durch den quadratischen Verlauf der Zielstrahlung über die Entfernung rechnerisch die doppelte Intensität erreicht wie beim Startzeitpunkt t₀. Durch das Abdecken des halben Strahlengangs 52 durch die vollständig eingeführte Blende 56 bleibt somit genügend Zielstrahlung übrig, um das Ziel zuverlässig weiterverfolgen zu können. Aus der Flugzeit t_{F} und dem Startzeitpunkt t₀ kann somit ein erster Blendenzeitpunkt t₁ bestimmt werden, der bei 30 % - oder einem anderen Wert - der Flugzeit t_{F} liegt. Zu diesem Blendenzeitpunkt t₁ wird das Einfahren der Blende 56 in den Strahlengang 52 vom Steuermittel 60 gesteuert.

Der errechnete Auftreffzeitpunkt t_{AR} muss hierbei nicht mit dem tatsächlichen Auftreffzeitpunkt t_{A} zusammenfallen, da dieser unbekannt ist und durch Flugmanöver des Ziels deutlich hinter dem errechneten Auftreffzeitpunkt t_{AR} liegen kann. Dies ist jedoch für das Einfahren der Blende 56 unschädlich, da die erste Annäherungsphase des Flugkörpers 2 an das Ziel während der ersten 30 % der errechneten Flugzeit t_{F} im Wesentlichen linear verläuft, und sich Flugmanöver oder andere Störungen erst bei weiterer Annäherung des Flugkörpers ans Ziel bemerkbar machen.

Eine weitere Möglichkeit besteht darin, den Schielwinkel α über die Zeit zu überwachen und den Blendenzeitpunkt t₂ in Abhängigkeit vom Verlauf des Schielwinkels α zu steuern. Bei dem Beispiel aus Figur 7 tritt eine Abschattung erst bei einem Schielwinkel α oberhalb 50° auf. Sobald dieser Schielwinkel α erreicht wird, kann die Blende 56 in den Strahlengang 52 eingefahren werden, jedoch zweckmäßigerweise erst nach Absolvierung von zumindest 30% der Flugzeit t_{f}, um einen Verlust des Ziels sicher zu vermeiden. Bei dem Beispiel aus Figur 7 wird der Blendenzeitpunkt t₂, an dem die Blende 56 in den Strahlengang 52 eingefahren wird, aus der Dauer des Schielwinkels α oberhalb 50° - oder einem anderem Schielwinkelgrenzwert - während eines vorgegebenen Zeitintervalls, beispielsweise 10 Sekunden, bestimmt. Zum Zeitpunkt t₂ ist diese vorbestimmte Dauer überschritten und die Blende 56 wird eingefahren. Von diesem Zeitpunkt t₂, wie auch vom zuvor beschriebenen Zeitpunkt t₁, verbleibt die Blende 56 im Strahlengang 52 unabhängig davon, wie der Schielwinkel α im weiteren Verlauf sich verhält.

Eine weitere Möglichkeit zur Steuerung des Blendenzeitpunkts ist anhand von Figur 8 angedeutet. Dargestellt ist ein stark geglätteter Verlauf der auf den Detektor 36 auftreffenden Strahlung 86 in Abhängigkeit von dessen Wellenlänge λ. Die Strahlung 86 umfasst beispielsweise einen Anteil Strukturstrahlung 88, die vom stark erhitzten Dom 6 und anderen Elementen 20 des Flugkörpers 2 abgestrahlt wird und der mit zunehmender Wellenlänge in seiner Intensität ansteigt. Ein Anteil Hintergrundstrahlung 90, der der Einfachheit halber als über die Wellenlänge konstant angenommen wird, ist auf diese Strukturstrahlung 88 aufaddiert, sodass die Strahlung 86 aus der Summe der Strukturstrahlung 88 und der Hintergrundstrahlung 90 zusammengesetzt ist. Zusätzlich kommt ein sehr kleiner Anteil Zielstrahlung 92 in einem verhältnismäßig engen Spektralintervall zur Strahlung 86 hinzu. Bei starken Nickbewegungen der Außenoptik 8 schwankt die Strukturstrahlung 88 sehr stark, sodass die Strahlung 86 sehr schnell die Sättigung des Detektors 36, die in Figur 7 als 100 % dargestellt ist, erreichen kann. Wird eine starke Schwankung der Strahlung 86 festgestellt, beispielsweise um eine Strahlungsschwankung ΔI oberhalb eines Grenzwerts von z. B. 25 % der Detektorsättigungsstrahlung, wobei die Strahlungsschwankung ΔI über die gesamte absolvierte Flugzeit oder über ein anderes Zeitintervall verwendet werden kann, so wird die Blende 56 in den Strahlengang 52 eingefahren. Bei dem Beispiel aus Figur 8 wird zweckmäßigerweise die Blende 78 eingefahren, die als Spektralfilter zum Filtern von langwelliger Infrarotstrahlung ausgebildet ist. Die Strahlung 86 wird hierdurch reduziert, wie durch gestrichelte Linien um die Grenzwellenlänge λ₁ ab der der Spektralfilter der Blende 78 filtert, dargestellt ist. Eine Schwankung der Strukturstrahlung 88 und damit der gesamten Strahlung 86 wird hierdurch stark reduziert und Bildfehler werden verringert.

### Bezugszeichenliste

- 2: Flugkörper
- 4: Suchkopf
- 6: Dom
- 8: Außenoptik
- 10: Spiegel
- 12: Spiegel
- 14: Nickachse
- 16: Rollachse
- 18: Optik
- 20: Element
- 22: Eintrittsapertur
- 24: Domwinkel
- 26: Schielwinkel
- 28: Abschattung
- 30: abgeschattete Apertur
- 32: Detektoroptik
- 34: Gegenstand
- 36: Detektor
- 38: Rollrahmen
- 40: Element
- 42: Lager
- 44: Nickrahmen
- 46: Lager
- 48: Prisma
- 50: Prisma
- 52: Strahlengang
- 54: Zone
- 56: Blende
- 58: Antrieb
- 60: Steuermittel
- 62: Pfeil
- 64: Linie
- 66: Mittelabschnitt
- 68: Passierbereich
- 70: Blendenbereich
- 72: Vorderkante
- 74: Abschattung
- 76: Blendenrad
- 78: Blende
- 80: Blende
- 82: Blende
- 84: Drehachse
- 86: Strahlung
- 88: Strukturstrahlung
- 90: Hintergrundstrahlung
- 92: Zielstrahlung
- α: Schielwinkel
- ΔI: Strahlungsschwankung
- λ: Wellenlänge
- λ₁: Grenzwellenlänge
- t₀: Startzeitpunkt
- t₁: Blendenzeitpunkt
- t₂: Blendenzeitpunkt
- t_{A}: Auftreffzeitpunkt
- t_{AR}: Errechneter Auftreffzeitpunkt
- t_{F}: Flugzeit

## Patentansprüche

1. Optisches System für einen Flugkörper (2) mit einer Optik (18) zum Abbilden eines Gegenstands (34) mittels eines Strahlengangs (52) in eine Abbildungsebene, wobei die Optik (18) eine um eine Rollachse (16) und eine Nickachse (14) des Flugkörpers (2) drehbar gelagerte Außenoptik (8) und eine Innenoptik (32) aufweist und eines der Enden des Strahlengangs (52) strukturfest im Flugkörper (2) liegt,
**gekennzeichnet**
**durch** eine während eines Flugs des Flugkörpers (2) in den Strahlengang (52) einführbare Blende (56, 78, 80, 82), ein Steuermittel (60) und einen von dem Steuermittel (60) gesteuerten Antrieb (58), wobei die Blende (56, 78, 80, 82) durch den von dem Steuermittel (60) gesteuerten Antrieb (58) in den Strahlengang (52) einführbar ist, und wobei das Steuermittel (60) konfiguriert ist, um die Blende (56, 78, 80, 82) in Abhängigkeit eines vorbestimmten Parameters in den Strahlengang (52) hineinzubewegen, zum Ausblenden einer durch ein Element (20) des Flugkörpers (2) bewirkten Abschattung (28) im Strahlengang (52) bei einer zur Rollachse (16) verkippten Blickrichtung der Außenoptik (8).

2. Optisches System nach Anspruch 1,
**dadurch gekennzeichnet,**
**dass** die in den Strahlengang eingeführte Blende (56, 78, 80, 82) so angeordnet ist, dass sie bei einer Bewegung der Außenoptik (8) um die Nickachse (14) in einem Winkelbereich von zumindest 150° die Abschattung (28) des strukturfesten Elements (20) abdeckt.

3. Optisches System nach Anspruch 1 oder 2,
**dadurch gekennzeichnet,**
**dass** die Außenoptik (8) relativ zur Blende (56, 78, 80, 82) um die Nickachse (14) drehbar ist.

4. Optisches System nach einem der vorhergehenden Ansprüche,
**dadurch gekennzeichnet,**
**dass** die Blende (56, 78, 80, 82) um die Rollachse (16) drehbar ist

5. Optisches System nach einem der vorhergehenden Ansprüche,
**dadurch gekennzeichnet,**
**dass** die Blende (56, 78, 80, 82) zusammen mit der Innenoptik (32) um die Rollachse (16) drehbar ist.

6. Optisches System nach einem der vorhergehenden Ansprüche,
**dadurch gekennzeichnet,**
**dass** die Blende (56, 78, 80, 82) asymmetrisch in den Strahlengang (52) einführbar ist.

7. Optisches System nach einem der vorhergehenden Ansprüche,
**dadurch gekennzeichnet,**
**dass** die Blende (56, 78, 80, 82) mit einer geraden Kante (72) mit einer Kantenrichtung versehen ist, die bei einer Bewegung der Blende (56, 78, 80, 82) in den Strahlengang (52) hinein als Vorderkante (72) in den Strahlengang (52) eingeführt wird, wobei die Kantenrichtung in jeder Position der Außenoptik (8) senkrecht zur Nickachse (14) ausgerichtet ist.

8. Optisches System nach einem der vorhergehenden Ansprüche,
**dadurch gekennzeichnet,**
**dass** die Blende (78, 80, 82) einen teiltransmissiven Spektralfilter aufweist.

9. Optisches System nach einem der vorhergehenden Ansprüche,
**dadurch gekennzeichnet,**
**dass** die Blende einen Blendenträger (76) mit mehreren als unterschiedliche Spektralfilter ausgeführte Blendenelementen umfasst, die wählbar in den Strahlengang (52) einführbar sind.

10. Optisches System nach Anspruch 9,
**dadurch gekennzeichnet,**
**dass** die Auswahl des Spektralfilters in Abhängigkeit von einer Frequenz einer Zielstrahlung erfolgt.

11. Verfahren zum Abbilden eines Gegenstands (34) mittels eines Strahlengangs (52) einer Optik (18) eines Flugkörpers (2) in eine Abbildungsebene, wobei die Optik (18) eine um eine Rollachse (16) und eine Nickachse (14) des Flugkörpers (2) drehbar gelagerte Außenoptik (8) und eine Innenoptik (32) aufweist und eines der Enden des Strahlengangs (52) strukturfest im Flugkörper (2) liegt,
**dadurch gekennzeichnet,**
**dass** während eines Flugs des Flugkörpers (2) eine Blende (56, 78, 80, 82) durch einen von einem Steuermittel (60) gesteuerten Antrieb (58) in den Strahlengang (52) eingeführt wird zum Ausblenden einer Abschattung (28) eines strukturfesten Elements (20) des Flugkörpers (2) im Strahlengang (52) bei einem großen Schielwinkel (α) der Optik (18), wobei das Steuermittel (60) konfiguriert ist, um die Blende (56, 78, 80, 82) in Abhängigkeit von einem vorbestimmten Parameter in den Strahlengang (52) hineinzubewegen.

12. Verfahren nach Anspruch 11,
**dadurch gekennzeichnet,**
**dass** die Flugzeit (t_{F}) bis zu einem anvisierten Ziel errechnet wird und mit Hilfe eines Timers das Einführen der Blende (56, 78, 80, 82) nach Ablauf von zumindest 25% der berechneten Flugzeit (t_{F}) zum anvisierten Ziel gesteuert wird.

13. Verfahren nach Anspruch 11 oder 12,
**dadurch gekennzeichnet,**
**dass** während des Flugs eine Intensität einer auf einen Detektor (32) auftreffenden Strahlung überwacht wird und das Einführen der Blende (56, 78, 80, 82) bei einer zeitlichen Schwankung der Intensität um mehr als einen vordefinierten Grenzwert erfolgt.

14. Verfahren nach einem der Ansprüche 11 bis 13,
**dadurch gekennzeichnet,**
**dass** während des Flugs ein Schielwinkel (α) der Außenoptik (8) überwacht wird und das Einführen der Blende (56, 78, 80, 82) in Abhängigkeit vom Verlauf des Schielwinkels (α) über eine Zeit erfolgt.

## Claims

1. Optical system for a missile (2) having optics (18) for imaging an object (34) by means of a beam path (52) on an imaging plane, wherein the optics (18) have external optics (8), which are mounted such that they can rotate about a roll axis (16) and a pitch axis (14) of the missile (2), and internal optics (32), and one of the ends of the beam paths (52) is fixed with respect to the structure in the missile (2),
**characterized**
**by** a shutter (56, 78, 80, 82), which can be introduced into the beam path (52) during flight of the missile (2), a control means (60) and a drive (58) controlled by the control means (60), wherein the shutter (56, 78, 80, 82) can be introduced into the beam path (52) by means of the drive (58) controlled by the control means (60), and wherein the control means (60) is configured to move the shutter (56, 78, 80, 82) into the beam path (52) as a function of a predetermined parameter, in order to mask out a shadow (28), which is produced by an element (20) of the missile (2), in the beam path (52) in a viewing direction of the external optics (8) which is tilted with respect to the roll axis (16).

2. Optical system according to Claim 1,
**characterized**
**in that** the shutter (56, 78, 80, 82) which is introduced into the beam path is arranged such that it covers the shadow (28) of the element (20) which is fixed to the structure during movement of the external optics (8) in an angle range of at least 150° about the pitch axis (14).

3. Optical system according to Claim 1 or 2,
**characterized**
**in that** the external optics (8) can be rotated about the pitch axis (14) relative to the shutter (56, 78, 80, 82).

4. Optical system according to one of the preceding claims,
**characterized**
**in that** the shutter (56, 78, 80, 82) can be rotated about the roll axis (16).

5. Optical system according to one of the preceding claims,
**characterized**
**in that** the shutter (56, 78, 80, 82) can be rotated about the roll axis (16) together with the internal optics (32) .

6. Optical system according to one of the preceding claims,
**characterized**
**in that**
the shutter (56, 78, 80, 82) can be introduced asymmetrically into the beam path (52).

7. Optical system according to one of the preceding claims,
**characterized**
**in that** the shutter (56, 78, 80, 82) is provided with a straight edge (72) with an edge direction which is introduced as a front edge (72) into the beam path (52) during movement of the shutter (56, 78, 80, 82) into the beam path (52), with the edge direction being aligned at right angles to the pitch axis (14), in every position of the external optics (8).

8. Optical system according to one of the preceding claims,
**characterized**
**in that** the shutter (78, 80, 82) has a partially transmissive spectral filter.

9. Optical system according to one of the preceding claims,
**characterized**
**in that** the shutter has a shutter mount (76) with a plurality of shutter elements which are in the form of different spectral filters and can be introduced selectively into the beam path (52).

10. Optical system according to Claim 9,
**characterized**
**in that** the spectral filter is selected as a function of a frequency of target radiation.

11. Method for imaging an object (34) by means of a beam path (52) of optics (18) of a missile (2) on an imaging plane, wherein the optics (18) have external optics (8), which are mounted such that they can rotate about a roll axis (16) and a pitch axis (14) of the missile (2), and internal optics (32), and one of the ends of the beam paths (52) is fixed with respect to the structure in the missile (2),
**characterized**
**in that** a shutter (56, 78, 80, 82) is introduced into the beam path (52) during flight of the missile (2) by means of a drive (58) controlled by a control means (60) in order to mask out a shadow (28) of an element (20), which is fixed to the structure, of the missile (2) in the beam path (52) at a high squint angle (α) of the optics (18), wherein the control means (60) is configured to move the shutter (56, 78, 80, 82) into the beam path (52) as a function of a predetermined parameter.

12. Method according to Claim 11,
**characterized**
**in that** the flight time (t_{F}) to a target being aimed at is calculated, and the introduction of the shutter (56, 78, 80, 82) after at least 25% of the calculated flight time (t_{F}) to the target being aimed at has elapsed is controlled with the aid of a timer.

13. Method according to Claim 11 or 12,
**characterized**
**in that** an intensity of radiation striking a detector (32) is monitored during flight, and the shutter (56, 78, 80, 82) is introduced if the fluctuation of the intensity over time is more than a predefined limit value.

14. Method according to one of Claims 11 to 13,
**characterized**
**in that** a squint angle (α) of the external optics (8) is monitored during flight, and the shutter (56, 78, 80, 82) is introduced as a function of the profile of the squint angle (α) over time.

## Revendications

1. Système optique pour un missile (2) comprenant une optique (18) servant à représenter un objet (34) au moyen d'un trajet de rayon (52) dans un plan de représentation, l'optique (18) possédant une optique externe (8) montée à rotation autour d'un axe de roulis (16) et un axe de tangage (14) du missile (2) ainsi qu'une optique interne (32) et l'une des extrémités du trajet de rayon (52) se trouvant en position structurale fixe dans le missile (2),
**caractérisé**
**par** un diaphragme (56, 78, 80, 82) qui peut être introduit dans le trajet de rayon (52) pendant un vol du missile (2), un moyen de commande (60) et un mécanisme d'entraînement (58) commandé par le moyen de commande (60),
le diaphragme (56, 78, 80, 82) pouvant être introduit dans le trajet de rayon (52) par le mécanisme d'entraînement (58) commandé par le moyen de commande (60), et le moyen de commande (60) étant configuré pour déplacer le diaphragme (56, 78, 80, 82) à l'intérieur du trajet de rayon (52) en fonction d'un paramètre prédéfini en vue de masquer une projection d'ombre (28) dans le trajet de rayon (52), provoquée par un élément (20) du missile (2), lors d'une direction de visée de l'optique externe (8) basculée par rapport à l'axe de roulis (16).

2. Système optique selon la revendication 1,
**caractérisé en ce que** le diaphragme (56, 78, 80, 82) amené dans le trajet de rayon est disposé de telle sorte que lors d'un mouvement de l'optique externe (8) autour de l'axe de tangage (14), il recouvre la projection d'ombre (28) de l'élément (20) structural fixe dans une plage angulaire d'au moins 150°.

3. Système optique selon la revendication 1 ou 2,
**caractérisé en ce que** l'optique externe (8) peut tourner par rapport au diaphragme (56, 78, 80, 82) autour de l'axe de tangage (14).

4. Système optique selon l'une des revendications précédentes, **caractérisé en ce que** le diaphragme (56, 78, 80, 82) peut tourner autour de l'axe de roulis (16).

5. Système optique selon l'une des revendications précédentes, **caractérisé en ce que** le diaphragme (56, 78, 80, 82) peut tourner autour de l'axe de roulis (16) conjointement avec l'optique interne (32).

6. Système optique selon l'une des revendications précédentes, **caractérisé en ce que** le diaphragme (56, 78, 80, 82) peut être introduit de manière asymétrique dans le trajet de rayon (52).

7. Système optique selon l'une des revendications précédentes, **caractérisé en ce que** le diaphragme (56, 78, 80, 82) est pourvu d'une arête droite (72) ayant une direction d'arête qui, lors d'un mouvement du diaphragme (56, 78, 80, 82) vers l'intérieur du trajet de rayon (52), est introduite dans le trajet de rayon (52) en tant qu'arête avant (72), la direction d'arête étant orientée perpendiculairement à l'axe de tangage (14) dans chaque position de l'optique externe (8).

8. Système optique selon l'une des revendications précédentes, **caractérisé en ce que** le diaphragme (78, 80, 82) possède un filtre spectral partiellement transmissif.

9. Système optique selon l'une des revendications précédentes, **caractérisé en ce que** le diaphragme comporte un porte-diaphragme (76) comprenant plusieurs éléments de diaphragme réalisés sous la forme de filtres spectraux différents, lesquels peuvent être introduits de manière sélective dans le trajet de rayon (52).

10. Système optique selon la revendication 9,
**caractérisé en ce que** la sélection du filtre spectral s'effectue en fonction d'une fréquence d'un rayonnement cible.

11. Procédé de représentation d'un objet (34) au moyen d'un trajet de rayon (52) d'une optique (18) d'un missile (2) dans un plan de représentation, l'optique (18) possédant une optique externe (8) montée à rotation autour d'un axe de roulis (16) et un axe de tangage (14) du missile (2) ainsi qu'une optique interne (32) et l'une des extrémités du trajet de rayon (52) se trouvant en position structurale fixe dans le missile (2),
**caractérisé en ce que**
pendant un vol du missile (2), un diaphragme (56, 78, 80, 82) est introduit dans le trajet de rayon (52) par un mécanisme d'entraînement (58) commandé par un moyen de commande (60) afin de masquer une projection d'ombre (28) d'un élément (20) structural fixe du missile (2) dans le trajet de rayon (52) en présence d'un angle de strabisme (α) important de l'optique (18), le moyen de commande (60) étant configuré pour déplacer le diaphragme (56, 78, 80, 82) à l'intérieur du trajet de rayon (52) en fonction d'un paramètre prédéfini.

12. Procédé selon la revendication 11, **caractérisé en ce que** le temps de vol (t_{F}) jusqu'à une cible visée est calculé et l'introduction du diaphragme (56, 78, 80, 82) est commandée à l'aide d'une minuterie après écoulement d'au moins 25 % du temps de vol (t_{F}) calculé jusqu'à la cible visée.

13. Procédé selon la revendication 11 ou 12,
**caractérisé en ce que** pendant le vol, une intensité d'un rayonnement incident sur un détecteur (32) est surveillée et l'introduction du diaphragme (56, 78, 80, 82) s'effectue en présence d'une fluctuation dans le temps de l'intensité supérieure à une valeur limite prédéfinie.

14. Procédé selon l'une des revendications 11 à 13,
**caractérisé en ce que** pendant le vol, un angle de strabisme (α) de l'optique externe (8) est surveillé et l'introduction du diaphragme (56, 78, 80, 82) s'effectue en fonction de la courbe de l'angle de strabisme (α) pendant un temps donné.
